# EUROPEAN PATENT SPECIFICATION

(11) **EP 1 254 732 B1**
(45) Date of publication and mention of the grant of the patent: **05.10.2011**
(21) Application number: 02250051.6
(22) Date of filing: 04.01.2002
(51) Int. Cl.: B23D 61/02

(54) **Cutting-off apparatus**
Trenngerät
Appareil à sectionner

(30) Priority: 11.01.2001 JP 2001003355; 28.09.2001 JP 2001300250
(43) Date of publication of application: 06.11.2002
(73) Proprietor: Shiga Yamashita Co., Ltd., Yokaichi-shi, Shiga Prefecture (JP)
(72) Inventor: Harikawa, Takao, Shiga Yamashita Co., Ltd., Yokaichi-shi, Shiga Prefecture (JP)
(74) Representative: Chettle, Adrian John

(56) References cited:
- EP-A- 0 083 380
- WO-A-00/51789
- DE-A- 3 712 792
- US-A- 4 979 417
- US-A- 5 555 788
- US-A- 5 974 674

## Description

### BACKGROUND OF THE INVENTION

### FIELD OF THE INVENTION

The present invention relates to a method for cutting off an unnecessary object deposited on any of various castings such as automobile parts produced from an aluminum alloy or the like by a casting process, and particularly, to a method for cutting off an unnecessary object, using a diamond tip saw for cutting off an unnecessary object such as a gate of a casting, and a rotary device such as a motor for rotating the tip saw. More particularly, the present invention relates to a method for cutting off an unnecessary object deposited on a casting, using a diamond tip saw for cutting off an unnecessary object such as a gate deposited on a casting, and a rotary device such as a motor for rotating the tip saw at a high speed, wherein the amount of diamond tips used can be reduced; an energy-saving for a cutting power can be achieved, and the amount of chips or swarf produced upon the cutting of the unnecessary obj ect can be reduced to decrease the useless amount of a material, or waste, for the casting.

### DESCRIPTION OF THE RELATED ART

In general, various parts for an automobile, e.g., a cylinder head, a cylinder block, an intake manifold and the like are produced from an aluminum alloy by a casting process. A casting produced by such casting process has an unnecessary object such as a gate deposited thereon, and it is necessary to cut off the unnecessary object from the casting, thereby remarkably reducing the production cost for the casting.

There is such a conventionally known cutting-off apparatus which includes a diamond tip saw mounted at a tip end of a rotary shaft of a rotary device such as a motor, so that the diamond tip saw is rotated at a high speed by driving the rotary device to cut off an unnecessary object deposited on a casting.

In the conventional apparatus, the rotational speed of the diamond tip saw is in a range of 1,000 to 3,600 rpm, but in order to prevent the occurrence of a vibration during the cutting, the thickness of the tip saw is required to be on the order of 6 to 8 mm, if the diameter of the tip saw is on the order of 400 mm.

The present inventors have found that if the rotational speed of the tip saw is increased to 4,000 rpm or more, an increase in rigidity of the tip saw is provided remarkably by a centrifugal force provided by the tip saw itself and a gyroscopic moment effect and as a result, the thickness of the tip saw can be decreased by a value corresponding to an increment in rigidity of the tip saw. Thus, the present invention has been accomplished from the above finding.

### SUMMARY OF THE INVENTION

According to the invention there is provided a method for cutting off an unnecessary protrusion of a casting by using an apparatus comprising a rotary device having a rotary shaft adapted to be rotated at a high speed, and a disk-shaped diamond tipped saw mounted at one end of the rotary shaft and adapted to be rotated by the rotation of the rotary shaft to cut off the protrusion of said casting, characterised in that said saw has a thickness of 2.5mm for a rotational speed of 4,000 rpm to 8,000 rpm to increase the rigidity of the diamond tip saw by a centrifugal force provided by the tip saw itself and gyroscopic moment effect, and to decrease the thickness of the tip saw by a value corresponding to an increment in rigidity of the tip saw, whereby the amount of diamond tip used can be reduced and a saving of cutting power is achieved, and whereby the amount of chips or swarf produced upon the cutting of the protrusion can be reduced.

The invention allows the amount of diamond tip used to be reduced; an energy-saving for a cutting power to be achieved, and the amount of chips produced upon the cutting of the unnecessary object to be reduced to decrease the useless amount of a material for the casting, thereby remarkably reducing the production cost for the casting and overcoming the disadvantage associated with the conventionally known technology.

With the above arrangement, by increasing the rotational speed of the diamond tip saw to 4,000 rpm or more, an increase in rigidity of the diamond tip saw is provided remarkably by a centrifugal force provided by the tip saw itself and a gyroscopic moment effect and as a result, the thickness of the tip saw can be decreased by a value corresponding to an increment in rigidity of the tip saw.

The above and other objects, features and advantages of the invention will become apparent from the following description of the preferred embodiment taken in conjunction with the accompanying drawings.

### BRIEF DESCRIPTION OF THE DRAWINGS

Fig.1 is a perspective view of an embodiment of a cutting-o'ff apparatus according to the present invention; and
Fig.2 is an enlarged sectional view of a portion of the apparatus shown in Fig.1.

### DESCRIPTION OF THE PREFERRED EMBODIMENT

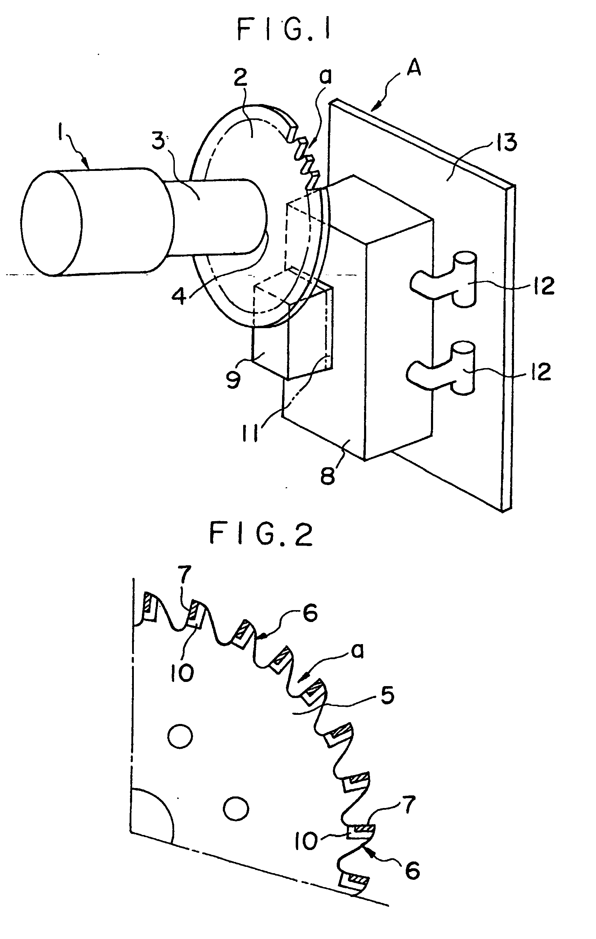

The present invention will now be described by way of an embodiment with reference to Figs.1 to 2.

Fig.1 shows a cutting-off apparatus A according to the present invention. The cutting-off apparatus A includes a rotary device 1 such as a motor and a disk-shaped diamond tip saw 2. The motor 1 (rotary device) includes a rotary shaft 3 having the disk-shaped diamond tip saw 2 mounted at its tip end 4. The rotary shaft 3 of the motor 1 is rotated at a high speed by driving the motor 1, and the disk-shaped diamond tip saw 2 mounted at the tip end 4 of the rotary shaft 3 is also rotated at a high speed with the rotation of the rotary shaft 3.

The disk-shaped diamond tip saw 2 has a tip saw body 5 provided at its peripheral edge with a large number of tips 6 arranged in a circumferential direction, as shown in Fig. 2 which is an enlarged side view of a portion indicated by a in Fig. 1, and diamond blades 7 are mounted to the tips 6, respectively. Each of the diamond blades 7 has a size of, for example, 4 mm x 4 mm x 1 mm and mounted to carbide portions 10.

The diamond tip saw 2 is rotated at more than 4000 rpm, preferably in the range of 4000 rpm to 10,000 rpm, by the rotation of rotating shaft 3 by a motor 1, to cut-off and to remove an unnecessary object 9 deposited on a casting 8, such as a cylinder head of the engine part of a car, when casting 8, such as aluminium alloy is produced, as illustrated in Fig. 1.

The diamond tip saw 2 rotated at the high speed has a rigidity remarkably increased by its own centrifugal force and a gyroscopic moment effect, and the thickness of the diamond tip saw 2 can be reduced by a value corresponding to the increment in the rigidity. More specifically, in a prior art cutting-off apparatus including a tip saw having a size on the order of 300 to 400 mm and a cutting shaft rotated at a rotational speed of 1,800 rpm, the thickness of the tip saw is required to be on the order of 6 mm to 8 mm, but according to the present invention, when a gate having an area to be cut of 50 mm x 100 mm is cut at a cutting shaft rotational speed of 7,000 rpm and at a feed rate of 30 mm/sec, the thickness of the tip saw can be 2.5 mm.

By reducing the thickness of the tip saw to 2.5 mm from the range of 6 mm to 8 mm as described above, the amount of diamond tips used is decreased to 4 mm x 4 mm x 1 mm, and an energy-saving for a cutting power, i.e., a cutting power provided by the motor 1 shown in Fig.1 is achieved, and the amount of chips produced from a cut portion 11 upon cutting of an unnecessary object 9 on a casting 8 is decreased. This can contribute to a reduction in production cost of the casting. Reference character 12 in Fig.1 designates clamps 12 secured to a support plate 13 for clamping and retaining the casting 8. Clamps 12 are also mounted to a support plate 13 of an opposed device (not shown) to clamp and retain the casting 8 from opposite sides.

Although the embodiments of the present invention have been described in detail, it will be understood that the present invention is not limited to the above-described embodiments, and various modifications in design may be made without departing from the scope of the invention defined in the claims.

## Claims

1. A method for cutting off an unnecessary protrusion (9) of a casting (8) by using an apparatus comprising a rotary device having a rotary shaft (3) adapted to be rotated at a high speed, and a disk-shaped diamond tipped saw (2) mounted at one end of the rotary shaft and adapted to be rotated by the rotation of the rotary shaft to cut off the protrusion (9) of said casting (8), **characterised in that** said saw has a thickness of 2.5mm for a rotational speed of 4,000 rpm to 8,000 rpm to increase the rigidity of the diamond tip saw by a centrifugal force provided by the tip saw itself and gyroscopic moment effect, and to decrease the thickness of the tip saw by a value corresponding to an increment in rigidity of the tip saw, whereby the amount of diamond tip used can be reduced and a saving of cutting power is achieved, and whereby the amount of chips or swarf produced upon the cutting of the protrusion (9) can be reduced.

2. The method according to claim 1 and adapted for a rotational speed of 7,000 rpm.

3. The method according to claim 1 or claim 2 wherein said casting is of aluminium.

## Patentansprüche

1. Verfahren zum Abtrennen eines unnötigen Vorsprungs (9) an einem Gussteil (8) unter Verwendung einer Anlage, die eine drehbare Vorrichtung mit einer drehbaren Welle (3), die dazu ausgebildet ist, dass sie sich mit einer hohen Geschwindigkeit dreht, und eine scheibenförmige an den Spitzen mit Diamant besetzte Säge (2) umfasst, die an einem Ende der drehbaren Welle angebracht ist und dazu ausgebildet ist, dass sie durch die Rotation der drehbaren Welle gedreht wird, so dass sie den Vorsprung (9) des Gussteils (8) abbrennt, **dadurch gekennzeichnet, dass** die Säge eine Dicke von 2,5 mm für eine Rotationsgeschwindigkeit von 4,000 Upm bis 8.000 Upm aufweist, um die Steifigkeit der Diamantspitzensäge durch eine Zentrifugalkraft, die von der Diamantsäge selbst und einem Kreiselmornenteffekt bereitgestellt wird, zu erhöhen und um die Dicke der Diamantsäge um einen Wert zu verringern, der einem Inkrement der Steifigkeit der Diamantsäge zugeordnet ist, wodurch die Menge an abgenutzter Diamantspitze verringert werden kann und eine Einsparung an Schneidenergie erreicht wird und wodurch die Menge an beim Abtrennen des Vorsprungs (9) gebildeten Spänen oder Abrieb verringert werden kann.

2. Verfahren nach Anspruch 1, das für eine Rotationsgeschwindigkeit von 7.000 Upm geeignet ist.

3. Verfahren nach Anspruch 1 oder Anspruch 2, wobei das Gussteil aus Aluminium gebildet ist.

## Revendications

1. Procédé de coupe d'une protubérance inutile (9) sur une pièce coulée (8) qui utilise un appareil comprenant un dispositif rotatif avec un arbre de rotation (3) adapté à être entraîné en rotation à une vitesse élevée et une scie en forme de disque à pointes de diamant (2) montée à une extrémité de l'arbre de rotation et adaptée à être entraînée en rotation par la rotation de l'arbre de rotation, afin de couper la protubérance (9) de ladite pièce coulée (8), **caractérisé en ce que** ladite scie présente une épaisseur de 2,5 mm pour une vitesse de rotation de 4000 tpm à 8000 tpm, afin d'augmenter la rigidité de la scie en forme de disque à pointes de diamant par une force centrifuge produite par la scie à pointes de diamant elle-même d'une valeur correspondant à un incrément de rigidité de la scie à pointes de diamant, ce qui permet de réduire la quantité de pointes de diamant usées et de réaliser une économie de puissance de coupe, ainsi que de réduire la quantité de copeaux produits lors de la coupe de la protubérance (9).

2. Procédé suivant la revendication 1 et adapté à une vitesse de rotation de 7000 tpm.

3. Procédé suivant la revendication 1 ou 2, dans lequel ladite pièce coulée est en aluminium.
